# EUROPEAN PATENT SPECIFICATION

(11) **EP 4 239 285 B1**
(45) Date of publication and mention of the grant of the patent: **19.08.2026**
(21) Application number: 23159402.9
(22) Date of filing: 01.03.2023
(51) Int. Cl.: G01C 15/00, G01C 3/08, G01S 7/481

(54) **SURVEYING INSTRUMENT**
VERMESSUNGSINSTRUMENT
INSTRUMENT D'ARPENTAGE

(30) Priority: 02.03.2022 JP 2022031614
(43) Date of publication of application: 06.09.2023
(73) Proprietor: Topcon Corporation, Tokyo 174-8580 (JP)
(72) Inventor: YUASA, Taichi, Tokyo-to, 174-8580 (JP)
(74) Representative: Louis Pöhlau Lohrentz

(56) References cited:
- EP-A1- 3 489 714
- EP-A1- 3 812 700
- WO-A1-2022/058577
- DE-A1- 10 151 701

## Description

### BACKGROUND OF THE INVENTION

The present invention relates to a surveying instrument which can acquire three-dimensional coordinates of an object.

A surveying instrument such as a laser scanner or a total station has an electronic distance meter which detects a distance to an object which is to be measured by the prism distance measurement using a reflecting prism having the retro-reflective property as the object or the non-prism distance measurement using no reflecting prism.

In a conventional surveying instrument, to coincide an optical axis of a distance measuring light projected toward the object with a reflected distance measuring light reflected from the object, the optical axis of the distance measuring light or the optical axis of the reflected distance measuring light is deflected by a mirror or the like. Further, to miniaturize an optical system of the surveying instrument, the optical axis of the distance measuring light or the optical axis of the reflected distance measuring light may be deflected more than once.
In a case where a mirror is used for the deflection of the optical axis, since the mirror needs to have a size correspondence with a light flux of the distance measuring light or the reflected distance measuring light, a large mirror must be used. Thereby, there are problems that the optical system grows in size or a device weight is increased. State of the art surveying instruments are disclosed in EP 3 489 714 A1, and DE 101 51 701 A1.

### SUMMARY OF INVENTION

It is an object of the present invention to provide a surveying instrument which is capable of obtaining a sufficient light receiving amount of a reflected distance measuring light.

To attain the object as described above, a surveying instrument according to the present invention is defined in claim 1.

Further, preferred embodiments of the surveying instrument are defined in the dependent claims.

As a result, it is possible to transmit a part of the reflected distance measuring light which has entered the beam splitter film and obtain a sufficient receiving light amount even in case of the short-distance measurement or the small object.

### BRIEF DESCRIPTION OF DRAWINGS

FIG.1 is a front sectional drawing to show a surveying instrument according to a first embodiment of the present invention.
FIG.2A is a block diagram to show a distance measuring unit according to the first embodiment of the present invention, and FIG.2B is a side elevation of a reflecting prism.
FIG.3 is a block diagram to show the distance measuring unit according to the first embodiment of the present invention.
FIG.4 is a block diagram to show a distance measuring unit according to a second embodiment of the present invention.
FIG.5 is a block diagram to show a distance measuring unit according to a third embodiment of the present invention.
FIG.6 is a block diagram to show a distance measuring unit according to a fourth embodiment of the present invention.
FIG.7 is a block diagram to show a distance measuring unit according to a fifth embodiment of the present invention.
FIG.8 is a block diagram to show a distance measuring unit according to a sixth embodiment of the present invention.

### DETAILED DESCRIPTION OF THE PREFERRED EMBODIMENT

A description will be given below on embodiments of the present invention by referring to the attached drawings.

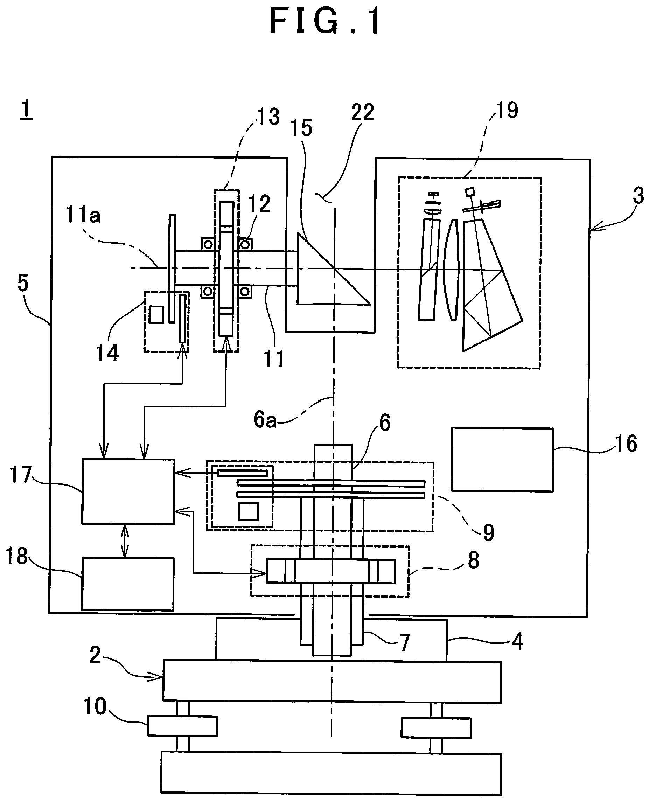

First, by referring to FIG.1, a description will be given on a surveying instrument according to a first embodiment of the present invention.

A surveying instrument 1 is, for instance, a laser scanner. The surveying instrument 1 is constituted of a leveling module 2 mounted on a tripod (not shown) and a surveying instrument main body 3 mounted on the leveling module 2.

The leveling module 2 has leveling screws 10, and the surveying instrument main body 3 is leveled up by the leveling screws 10.

The surveying instrument main body 3 includes a fixing unit 4, a frame unit 5, a horizontal rotation shaft 6, a horizontal rotation bearing 7, a horizontal rotation motor 8 as a horizontal rotation driving module, a horizontal angle encoder 9 as a horizontal angle detector, a vertical rotation shaft 11, a vertical rotation bearing 12, a vertical rotation motor 13 as a vertical rotation driving module, a vertical angle encoder 14 as a vertical angle detector, a scanning mirror 15 which is a vertical rotation module, an operation panel 16 which serves as both an operation module and a display module, an arithmetic control module 17, a storage module 18, a distance measuring unit 19 and others. It is to be noted that, as the arithmetic control module 17, a CPU specialized for this instrument or a general-purpose CPU is used.

The horizontal rotation bearing 7 is fixed to the fixing unit 4. The horizontal rotation shaft 6 has a vertical axis 6a, and the horizontal rotation shaft 6 is rotatably supported by the horizontal rotation bearing 7. Further, the frame unit 5 is supported by the horizontal rotation shaft 6, and the frame unit 5 integrally rotates with the horizontal rotation shaft 6 in the horizontal direction.

The horizontal rotation motor 8 is provided between the horizontal rotation bearing 7 and the frame unit 5, and the horizontal rotation motor 8 is controlled by the arithmetic control module 17. The arithmetic control module 17 rotates the frame unit 5 around the axis 6a by the horizontal rotation motor 8.

A relative rotation angle of the frame unit 5 with respect to the fixing unit 4 is detected by the horizontal angle encoder 9. A detection signal from the horizontal angle encoder 9 is input to the arithmetic control module 17, and the horizontal angle data is calculated by the arithmetic control module 17. The arithmetic control module 17 performs the feedback control of the horizontal rotation motor 8 based on the horizontal angle data.

Further, in the frame unit 5, the vertical rotation shaft 11 having a horizontal axis 11a is provided. The vertical rotation shaft 11 can rotate via the vertical rotation bearing 12. It is to be noted that an intersection of the axis 6a and the axis 11a is a projecting position for a distance measuring light, and the intersection is an origin of a coordinate system of the surveying instrument main body 3.

A recess portion 22 is formed in the frame unit 5. One end portion of the vertical rotation shaft 11 extends to the inside of the recess portion 22. Further, the scanning mirror 15 is fixed to the one end portion, and the scanning mirror 15 is accommodated in the recess portion 22. Further, the vertical angle encoder 14 is provided at the other end portion of the vertical rotation shaft 11.

The vertical rotation motor 13 is provided on the vertical rotation shaft 11, and the vertical rotation motor 13 is controlled by the arithmetic control module 17. The arithmetic control module 17 rotates the vertical rotation shaft 11 by the vertical rotation motor 13. Further, and the scanning mirror 15 is rotated around the axis 11a.

A rotation angle of the scanning mirror 15 is detected by the vertical angle encoder 14, and a detection signal is input to the arithmetic control module 17. The arithmetic control module 17 calculates the vertical angle data of the scanning mirror 15 based on the detection signal, and performs the feedback control of the vertical rotation motor 13 based on the vertical angle data.

Further, the horizontal angle data and the vertical angle data calculated by the arithmetic control module 17, and the measurement results are stored in the storage module 18. As the storage module 18, various types of storage devices are used. These storage devices include: an HDD as a magnetic storage device, a CD or DVD as an optical storage device, a memory card and a USB memory as a semiconductor storage device, and other storage devices. The storage module 18 may be attachable to and detachable from the frame unit 5. Alternatively, the storage module 18 may enable transmitting the data to an external storage device or an external data processing device via a not shown communicating means.

In the storage module 18, various types of programs are used. These programs include: a sequence program for controlling a distance measuring operation, a calculation program for calculating a distance by the distance measuring operation, a calculation program for calculating an angle based on the horizontal angle data and the vertical angle data, a calculation program for calculating three-dimensional coordinates of a desired measuring point based on a distance and an angle, and other programs. Further, when the various types of programs stored in the storage module 18 are executed by the arithmetic control module 17, various types of processing are performed.

The operation panel 16 is, for instance, a touch panel. The operation panel 16 serves as both an operation module which performs, for instance, changing distance measurement instructions or measurement conditions such as a measuring point interval and a display module which displays distance measurement results, images and the like.

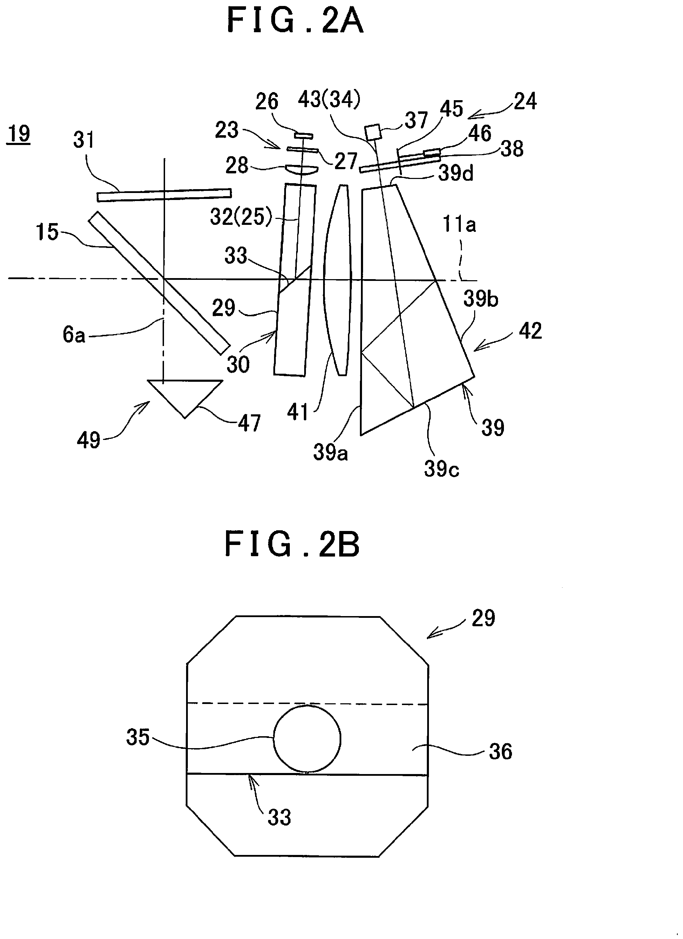

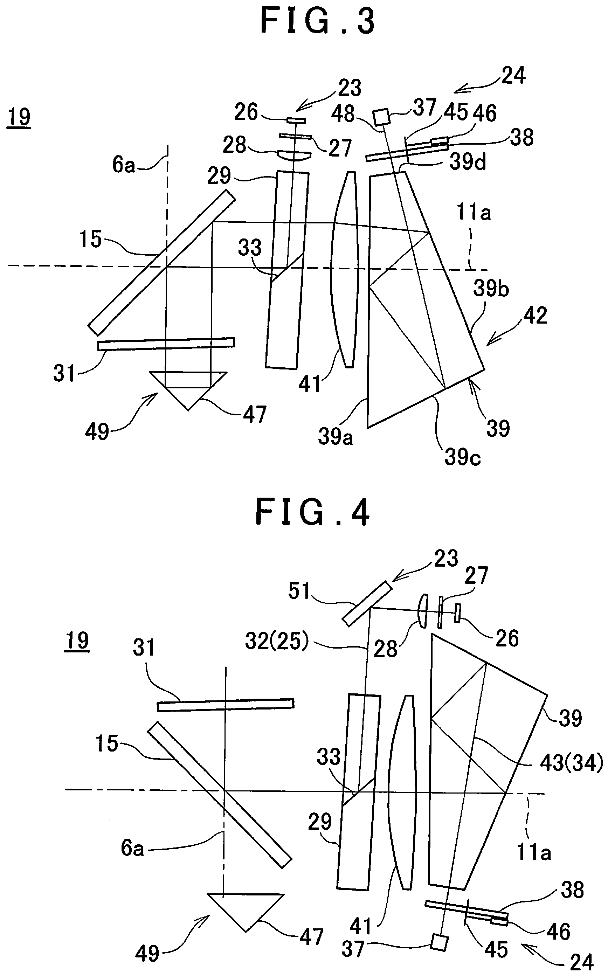

Next, a description will be given on the distance measuring unit 19 by referring to FIG.2A, FIG.2B and FIG.3.

The distance measuring unit 19 has a distance measuring light projecting module 23 and a distance measuring light receiving module 24. It is to be noted that, the distance measuring light projecting module 23 and the distance measuring light receiving module 24 configure a distance measuring unit.

The distance measuring light projecting module 23 has a distance measuring optical axis 25. Further, the distance measuring light projecting module 23 has a light emitter 26, for instance, a laser diode (LD), a plane-parallel plate 27, a collimator lens 28, and a reflecting prism 29 provided on the distance measuring optical axis 25 sequentially from a light emission side. Further, the scanning mirror 15 is provided on a reflected optical axis of the reflecting prism 29. Further, a window unit 31 which is formed of a transparent material and integrally rotates with the scanning mirror 15 is provided on a reflected optical axis of the scanning mirror 15. It is to be noted that the window unit 31 is provided in FIG.2, but the window unit 31 may be omitted.

It is to be noted that the plane-parallel plate 27, the collimator lens 28, the reflecting prism 29, and the like configure a light projecting optical system 30. Further, in the present embodiment, the distance measuring optical axis 25 and the distance measuring optical axis 25 reflected by the reflecting prism 29 are generically referred to as the distance measuring optical axis 25.

The plane-parallel plate 27 is, for instance, a glass plate having a predetermined glass thickness, and arranged in such a manner that an incidence surface and a projecting surface of the plane-parallel plate 27 become orthogonal to the distance measuring optical axis 25. Further, the plane-parallel plate 27 is insertable into and/or removable from the distance measuring optical axis 25 by a driving mechanism such as a solenoid (not shown), and the plane-parallel plate 27 is appropriately inserted or removed in correspondence with an object. That is, in case of performing the prism measurement where the object is a prism or the like having the retroreflective property, the plane-parallel plate 27 is inserted onto the distance measuring optical axis 25. Further, in case of performing the non-prism measurement where the object is other than the prism, the plane-parallel plate 27 is configured to be removed from the distance measuring optical axis 25.

By inserting the plane-parallel plate 27 onto the distance measuring optical axis 25, a spread angle ϕ of the distance measuring light 32 emitted from the light emitter 26 is configured to enlarge via the plane-parallel plate 27. The spread angle ϕ of the distance measuring light 32 enlarged by the plane-parallel plate 27 is appropriately set in the range of 2 to 20 minutes. In the present embodiment, the spread angle ϕ of the distance measuring light 32 provided by the plane-parallel plate 27 is 6 minutes.

In a case where the plane-parallel plate 27 is not being inserted onto the distance measuring optical axis 25, the collimator lens 28 turns the distance measuring light 32 to a parallel light flux. Further, in a case where the plane-parallel plate 27 is being inserted onto the distance measuring optical axis 25, the collimator lens 28 is slightly diverged (diameter-expanded) the distance measuring light 32.

The reflecting prism 29 is formed by joining two trapezoidal prisms. The reflecting prism 29 has a rectangular parallelepiped shape with the two prisms being joined. An incidence surface of the distance measuring light 32 is orthogonal to the distance measuring optical axis 25, and a joined surface 33 of the reflecting prism 29 tilts at a predetermined angle with respect to the distance measuring optical axis 25. Further, a projecting surface of the reflecting prism 29 is configured in such a manner that the distance measuring optical axis 25 reflected on the joined surface 33 enters while slightly tilting at, for instance, approximately 2.5°. That is, the distance measuring light 32 enters the reflecting prism 29 at a slight tilt with respect to the projecting surface of the reflecting prism 29. Therefore, the projecting surface of the reflecting prism 29 prevents the distance measuring light 32 internally-reflected by the projecting surface from being received by a photodetector 37 (to be described later). It is to be noted that a tilt angle of the joined surface 33 is an angle causing the deflection (the reflection) of the distance measuring optical axis 25 in such a manner that the distance measuring optical axis 25 coincides with a light receiving optical axis 34 (to be described later) and the axis 11a. Alternatively, the tilt angle of the joined surface 33 may be set to 45°, and the distance measuring light 32 may enter the reflecting prism 29 with the distance measuring optical axis 25 being tilt with respect to the incidence surface of the reflecting prism 29 in such a manner that the distance measuring optical axis 25 coincides with the light receiving optical axis 34 and the axis 11a.

A beam splitter film 35 is formed at a central portion of the joined surface 33, and an antireflective film 36 is formed on entire front and back surfaces of the reflecting prism 29. The beam splitter film 35 has an elliptic shape in correspondence with a light flux of the distance measuring light 32. Further, a size of the beam splitter film 35 is equivalent to or slightly larger than a light flux diameter of the distance measuring light 32 diverged by the plane-parallel plate 27. Further, for instance, the beam splitter film 35 has optical characteristics to reflect a light which is approximately 80% and transmit a light which is approximately 20% therethrough.

It is to be noted that a ratio of a reflectance and a transmittance in the beam splitter film 35 is appropriately set in correspondence with applications or a distance to the object. For instance, in a case where the distance to the object is close, it is desirable to select the reflectance and the transmittance of the beam splitter film 35 from the range of the 50% to 70% reflectance and the 30% to 50% transmittance. Further, in a case where the distance to the object is far, it is desirable to select the reflectance and the transmittance of the beam splitter film 35 from the range of the 70% to 90% reflectance and the 10% to 30% transmittance.

The distance measuring light receiving module 24 has the light receiving optical axis 34. Further, the distance measuring light receiving module 24 has the photodetector 37, a light amount adjusting plate 38, and a receiving prism 39 provided on the light receiving optical axis 34 sequentially from a light reception side, and has a light receiving lens 41 with a predetermined NA (Numerical Aperture) provided on the light receiving optical axis 34 reflected by the receiving prism 39.

It is to be noted that the light amount adjusting plate 38, the receiving prism 39, the light receiving lens 41, the reflecting prism 29, and the like configure a light receiving optical system 42. Further, in the present embodiment, the light receiving optical axis 34 and the light receiving optical axis 34 reflected by the receiving prism 39 are generically referred to as the light receiving optical axis 34.

The distance measuring unit 19 is controlled by the arithmetic control module 17. In a case where the plane-parallel plate 27 is not present on the distance measuring optical axis 25, when the pulsed distance measuring light 32 is projected onto the distance measuring optical axis 25 from the light emitter 26, the distance measuring light 32 enters the collimator lens 28. Further, in a case where the plane-parallel plate 27 is present on the distance measuring optical axis 25, the distance measuring light 32 enters the collimator lens 28 with a slightly widened spread angle via the plane-parallel plate 27.

In a case where the distance measuring light 32 emitted from the light emitter 26 has directly entered the collimator lens 28, the collimator lens 28 turns the distance measuring light 32 to a parallel light flux. Further, in a case where the distance measuring light 32 emitted from the light emitter 26 has entered via the plane-parallel plate 27 in the collimator lens 28, the collimator lens 28 slightly diverges the distance measuring light 32.

The distance measuring light 32 transmitted through the collimator lens 28 enters with respect to an incidence surface of the reflecting prism 29 at a right angle, and the distance measuring light 32 is transmitted through the reflecting prism 29 and reflected on the joined surface 33 (the beam splitter film 35) such that the distance measuring optical axis 25 becomes coaxial with the light receiving optical axis 34 and the axis 11a. The distance measuring light 32 projected from the reflecting prism 29 is deflected at a right angle by the scanning mirror 15 and irradiated to the object via the window unit 31. By rotating the scanning mirror 15 around the axis 11a, the distance measuring light 32 becomes orthogonal to the axis 11a, and the distance measuring light 32 is rotated (scanned) within a plane including the axis 6a.

It is to be noted that the window unit 31 is tilted at a predetermined angle with respect to the distance measuring optical axis 25 in such a manner that the distance measuring light 32 reflected by the window unit 31 does not enter the photodetector 37.

The distance measuring light 32 reflected by the object (hereinafter a reflected distance measuring light 43) is reflected at a right angle by the scanning mirror 15, and the reflected distance measuring light 43 is received by the photodetector 37 through the light receiving optical system 42. The photodetector 37 is, for instance, an avalanche photodiode (APD) or an equivalent photoelectric conversion element.

The arithmetic control module 17 performs the distance measurement for each pulse of the distance measuring light 32 based on a time lag between a light emission timing of the light emitter 26 and a light reception timing of the photodetector 37 (that is, a round-trip time of a pulsed light) and a light velocity (Time of Flight). It is to be noted that the operation panel 16 can change the light emission timing of the light emitter 26, that is, a pulse interval.

It is to be noted that an internal reference light optical system (to be described later) is provided in the distance measuring unit 19. By performing the distance measurement based on a time lag between the light reception timing for an internal reference light (to be described later) received from the internal reference light optical system and the reception timing of the reflected distance measuring light 43 and the light velocity, the distance measuring unit 19 enables the further accurate distance measurement.

The frame unit 5 and the scanning mirror 15 are rotated at a constant speed, respectively. A two-dimensional scan by the distance measuring light 32 is performed by the cooperation between the vertical rotation of the scanning mirror 15 and the horizontal rotation of the frame unit 5. Further, the distance measurement data (a slope distance) is acquired by the distance measurement for each pulsed light, by detecting a vertical angle and a horizontal angle for each pulsed light by the vertical angle encoder 14 and the horizontal angle encoder 9, the arithmetic control module 17 enables calculating the vertical angle data and the horizontal angle data. Three-dimensional coordinates of the object and the three-dimensional point cloud data corresponding to the object can be acquired based on the vertical angle data, the horizontal angle data, and the distance measurement data.

Next, a description will be given on the light receiving optical system 42. It is to be noted that, in FIG.2A and FIG.3, only a chief ray (the distance measuring optical axis 25) of the distance measuring light 32 and a chief ray (the light receiving optical axis 34) of the reflected distance measuring light 43 are shown.

The receiving prism 39 is a quadrangular prism having a predetermined refractive index. The receiving prism 39 has a first surface 39a which the reflected distance measuring light 43 transmitted through the light receiving lens 41 enters, a second surface 39b which reflects the reflected distance measuring light 43 transmitted through a plane of the first surface 39a, a third surface 39c which the reflected distance measuring light 43 reflected by the second surface 39b and the first surface 39a enters, and a fourth surface 39d as a transmission surface which the reflected distance measuring light 43 reflected by the third surface 39c is transmitted through. The reflected distance measuring light 43 transmitted through the fourth surface 39d is configured to enter the photodetector 37. It is to be noted that, the third surface 39c reflects the reflected distance measuring light 43 in such a manner that the reflected distance measuring light 43 crosses the reflected distance measuring light 43 entered the first surface 39a.

The light amount adjusting plate 38 is a plastic disk, for instance. A circular gradation film is formed as a light amount adjusting surface on a surface of the light amount adjusting plate 38, and a part of the gradation film is arranged to be orthogonal to the light receiving optical axis 34. Further, the light amount adjusting plate 38 is rotatable around a rotation shaft 45 by a motor 46. An incidence position of the reflected distance measuring light 43 with respect to the light amount adjusting plate 38 (the light amount adjusting surface) is configured to change based on the rotation of the light amount adjusting plate 38.

The gradation film is configured in such a manner that a transmittance gradually increases (or decreases) in the range of θ = 0° to 360°. Therefore, by driving the motor 46 and controlling an incidence position of the reflected distance measuring light 43 with respect to the light amount adjusting plate 38 (the light amount adjusting surface), the arithmetic control module 17 is capable of changing the transmittance of the reflected distance measuring light 43 in the range of 0.0001% to 100%, for instance. The transmittance of the light amount adjusting plate 38 is appropriately set in correspondence with a type of the object or a distance to the object.

Further, a reference prism 47 having the retroreflective property is provided below the scanning mirror 15. In a process of the rotational irradiation of the distance measuring light 32 via the scanning mirror 15, a part of the distance measuring light 32 enters the reference prism 47. The distance measuring light 32 retro-reflected by the reference prism 47 is configured to enter the light receiving optical system 42 via the scanning mirror 15, and to be received by the photodetector 37.

Here, an optical path length from the light emitter 26 to the reference prism 47 and an optical path length from the reference prism 47 to the photodetector 37 are known. Therefore, the distance measuring light 32 reflected by the reference prism 47 can be used as internal reference light 48. The scanning mirror 15 and the reference prism 47 configured an internal reference light optical system 49.

Next, a description will be given on a case where the measurement is performed by the surveying instrument 1 having the distance measuring unit 19. Various types of operations of the distance measuring unit 19 are performed when the arithmetic control module 17 executes various types of programs stored in the storage module 18. It is to be noted that a case where the prism measurement is performed will be described below.

The distance measuring light 32 emitted from the light emitter 26 enters the reflecting prism 29 via the plane-parallel plate 27 and the collimator lens 28 at a right angle. Alternatively, the distance measuring light 32 emitted from the light emitter 26 enters the reflecting prism 29 via the collimator lens 28 at a right angle.

The distance measuring light 32 which has entered the reflecting prism 29 is transmitted through the reflecting prism 29, and deflected (reflected) such that the distance measuring optical axis 25 becomes coaxial with the light receiving optical axis 34 and the axis 11a by the beam splitter film 35 of the joined surface 33. At this time, since the beam splitter film 35 has an elliptic shape with a size equivalent to or slightly larger than a light flux diameter of the distance measuring light 32, the entire distance measuring light 32 enters the beam splitter film 35. Further, since a projecting surface of the reflecting prism 29 tilts with respect to the distance measuring optical axis 25, the distance measuring light 32 internally reflected on the projecting surface is not received by the photodetector 37.

The distance measuring light 32 reflected on the beam splitter film 35 is transmitted at a slight tilt with respect to the projecting surface of the reflecting prism 29 and irradiated to the object, for instance, a prism having the retroreflective property via the scanning mirror 15.

The reflected distance measuring light 43 reflected by the prism is reflected at a right angle by the scanning mirror 15, transmitted through the reflecting prism 29, and enters the light receiving optical system 42. Here, a light of a center part of the reflected distance measuring light 43 enters the beam splitter film 35 on the joined surface 33. Further, the reflected distance measuring light 43 is totally transmitted through portions other than the beam splitter film 35 via the antireflective film 36. On the other hand, a part of the reflected distance measuring light 43 which has entered is transmitted through a portion where the beam splitter film 35 is provided. In the present embodiment, since the beam splitter film 35 has a transmittance of 20%, 20% of the reflected distance measuring light 43 which has entered the beam splitter film 35 is transmitted through the beam splitter film 35.

The reflected distance measuring light 43 which has been transmitted through the reflecting prism 29 and has entered the light receiving optical system 42 is refracted in a process of being transmitted through the light receiving lens 41 and the first surface 39a. The reflected distance measuring light 43 is internally-reflected sequentially by the second surface 39b and the first surface 39a in the receiving prism 39, and enters the third surface 39c. Further, the reflected distance measuring light 43 is reflected on the third surface 39c toward the fourth surface 39d, that is, in a direction crossing the reflected distance measuring light 43 which has entered from the first surface 39a. The reflected distance measuring light 43 transmitted through the fourth surface 39d is received by the photodetector 37 while being decreased the light amount in a process of being transmitted through the light amount adjusting plate 38.

The arithmetic control module 17 calculates three-dimensional coordinates of the prism based on a distance measurement result of the distance measuring unit 19 and detection results of the horizontal angle encoder 9 and the vertical angle encoder 14.

It is to be noted that the measurement of the prism may be performed by scanning a whole circumference or a periphery of the prism with the distance measuring light 32 and determining a position at which the reflected distance measuring light 43 has been received as a position of the prism.

As described above, in a first embodiment, the reflecting prism 29, which is a combination of two prisms, is used as an optical member configured to coincide the distance measuring optical axis 25 with the light receiving optical axis 34, and the distance measuring light 32 is deflected by the beam splitter film 35 formed on the joined surface 33 of the reflecting prism 29.

Here, a light amount at a central portion of the reflected distance measuring light 43 increases if a distance to the object is short, and a light amount at a peripheral portion of the reflected distance measuring light 43 increases if a distance to the object is long.

Therefore, since a part of the reflected distance measuring light 43 which has entered the beam splitter film 35 is transmitted through the beam splitter film 35 having a predetermined transmittance, it is possible to reduce the vignetting of the reflected distance measuring light 43 due to the beam splitter film 35 and obtain a sufficient received light amount which enables the distance measurement even in the short-distance measurement.

Further, since it is possible to reduce the vignetting of the reflected distance measuring light 43 passing through the beam splitter film 35, a small corner cube or the like is used as the object, and performing the measurement is enabled even if a beam diameter of the reflected distance measuring light 43 is small.

Further, the plane-parallel plate 27 insertable into and/or removable from the distance measuring optical axis 25 is provided, and the use of the plane-parallel plate 27 enables adjusting a spread angle of the distance measuring light 32. Therefore, it is possible to properly use the non-prism measurement adopting the distance measuring light 32 with a small beam diameter and the strong light intensity and the prism measurement adopting the distance measuring light 32 with a large beam diameter.

Further, the light amount adjusting plate 38 having a light amount adjusting surface capable of changing a transmittance by the rotation is provided between the receiving prism 39 and the photodetector 37, and the rotation of the light amount adjusting plate 38 enables adjusting a light amount of the reflected distance measuring light 43 received by the photodetector 37.

Therefore, even in a case where the light amount of the reflected distance measuring light 43 is so large that the photodetector 37 is saturated, it is possible to attenuate the light amount of the reflected distance measuring light 43 to an appropriate light amount by the light amount adjusting plate 38.

Further, since the projecting surface of the reflecting prism 29 slightly tilts with respect to the distance measuring optical axis 25 deflected by the beam splitter film 35, it is possible to prevent the distance measuring light 32 internally reflected on the projecting surface is received by the photodetector 37, which reduces measurement errors.

Further, since the receiving prism 39 is provided and the reflected distance measuring light 43 is internally reflected in the receiving prism 39 more than once, it is possible to be shorten an optical path length in a direction of the axis 11a (a left-and-right direction with respect to a plane of paper), downsize an optical system of the distance measuring unit 19, and reduce a weight of the surveying instrument 1.

It is to be noted that, in a case where only the light amount adjusting plate 38 is insufficient to attenuate the reflected distance measuring light 43, an attenuation film may be formed on the plane-parallel plate 27. Usually, in a case where the prism measurement is performed, a light amount of the reflected distance measuring light 43 is higher than a light amount of the reflected distance measuring light 43 in case of performing the non-prism measurement. That is, it is in the case of the prism measurement that the light amount of the reflected distance measuring light 43 increases to the extent that the photodetector 37 is saturated. Therefore, by forming an attenuation film on the plane-parallel plate 27, it is possible to reduce a received light amount of the reflected distance measuring light 43 in the prism measurement.

Next, by referring to FIG.4, a description will be given on a second embodiment of the present invention. It is to be noted that, in FIG.4, the same components as shown in FIG.2A are referred by the same symbols, and detailed description thereof will be omitted.

The second embodiment is configured to coincide the distance measuring optical axis 25 with a light receiving optical axis 34 and an axis 11a by deflecting a distance measuring optical axis 25 twice. That is, in the second embodiment, a reflecting mirror 51 which deflects (reflects) the distance measuring optical axis 25 at a right angle is provided between a collimator lens 28 and a reflecting prism 29.

The distance measuring light 32 emitted from a light emitter 26 is deflected at a right angle by the reflecting mirror 51 and then perpendicularly enters the reflecting prism 29. That is, the distance measuring light 32 enters an incidence surface of the reflecting prism 29 perpendicularly. Processes after incidence upon the reflecting prism 29 are the same as the process in the first embodiment.

In the second embodiment, since the reflecting mirror 51 which deflects the distance measuring optical axis 25 at a right angle is provided, it is possible to be shorten an optical path length in a direction of an axis 6a (an up-and-down direction with respect to a plane of paper, see FIG.1) and downsize an optical system of a distance measuring unit 19.

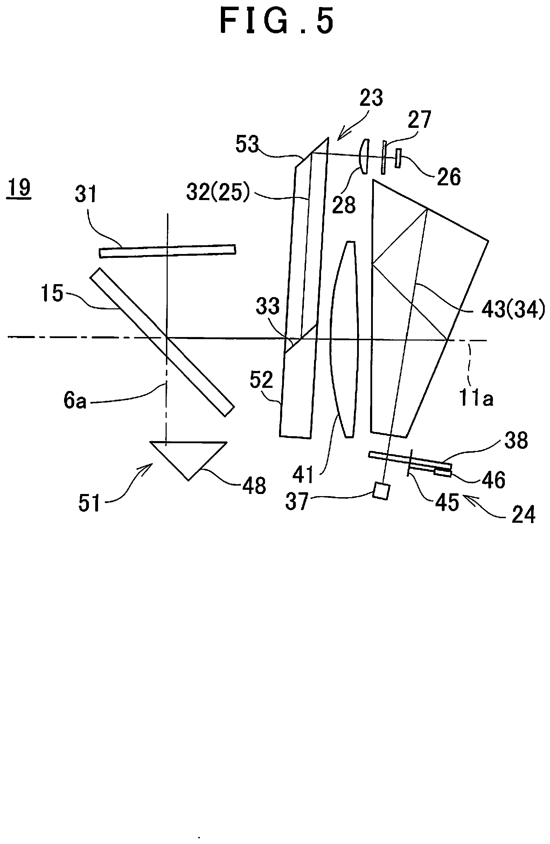

Next, by referring to FIG.5, a description will be given on a third embodiment of the present invention. It is to be noted that, in FIG.5, the same components as shown in FIG.2A are referred by the same symbols, and detailed description thereof will be omitted.

The third embodiment, like the second embodiment, is configured to coincide a distance measuring optical axis 25 with a light receiving optical axis 34 and an axis 11a, by deflecting the distance measuring optical axis 25 twice. On the other hand, in the third embodiment, a reflecting prism 52 is a trapezoidal prism with two prisms joined together.

The reflecting prism 52 has a reflecting surface 53, the reflecting surface 53 reflects (deflects) a distance measuring light 32 which entered at a right angle with respect to the reflecting prism 52 toward a joined surface 33. The distance measuring light 32 reflected on the reflecting surface 53 is deflected by a beam splitter film 35 on the joined surface 33 in such a manner that the distance measuring optical axis 25 coincides with a light receiving optical axis 34 and an axis 11a. Processes after incidence upon the beam splitter film 35 are the same as the processes in the first embodiment.

In the third embodiment, the reflecting prism 52 has the reflecting surface 53 which deflects a distance measuring optical axis 25 toward the beam splitter film 35. Therefore, it is possible to be shorten an optical path length in a direction of an axis 6a (an up-and-down direction with respect to a plane of paper, see FIG.1) and downsize an optical system of a distance measuring unit 19.

Further, since the prism is used instead of a mirror as an optical member configured to deflect the distance measuring optical axis 25 toward the beam splitter film 35, it is possible to suppress a deviation of the optical axis (a deflection angle error) based on temperature changes with respect to a surveying instrument main body 3 and improve a measurement accuracy.

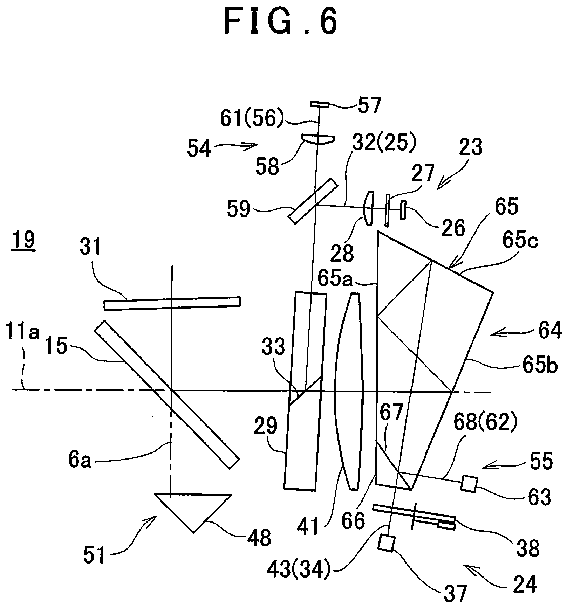

Next, by referring to FIG.6, a description will be given on a fourth embodiment of the present invention. It is to be noted that, in FIG.6, the same components as shown in FIG.2A are referred by the same symbols, and detailed description thereof will be omitted.

The fourth embodiment is a configuration that a tracking function added to the surveying instrument of the first embodiment, and a distance measuring unit 19 has a tracking light projecting module 54 and a tracking light receiving module 55.

The tracking light projecting module 54 has a tracking optical axis 56. Further, the tracking light projecting module 54 has a tracking light emitter 57, a collimator lens 58, a dichroic mirror 59, and a reflecting prism 29 sequentially provided on the tracking optical axis 56 from a light emission side. It is to be noted that, in the present embodiment, the tracking optical axis 56 and the tracking optical axis 56 reflected by the reflecting prism 29 are generically referred to as the tracking optical axis 56. Further, a distance measuring projecting module 23, that is, a light emitter 26, a plane-parallel plate 27, and a collimator lens 28 are provided on a reflection side of the dichroic mirror 59.

The tracking light emitter 57 is, for instance, a laser diode (LD), and configured to project a tracking light 61 having a near-infrared wavelength different from a wavelength of a distance measuring light 32. Further, the dichroic mirror 59 is configured to transmit through the tracking light 61 and reflect the distance measuring light 32.

That is, the dichroic mirror 59 is provided on a common optical path of the distance measuring light 32 and the tracking light 61 (an intersecting position of a distance measuring optical axis 25 and the tracking optical axis 56), and deflects (reflects) the distance measuring optical axis 25 in such a manner that the distance measuring optical axis 25 coincides with the tracking optical axis 56. Therefore, the distance measuring light 32 and the tracking light 61 are coaxially irradiated toward an object.

The tracking light receiving module 55 has a tracking light receiving optical axis 62. Further, the tracking light receiving module 55 has a tracking photodetector 63, a receiving prism 64, and a light receiving lens 41 sequentially provided on the tracking light receiving optical axis 62 from a light reception side.

The receiving prism 64 has a configuration in which a first prism 65 which is a quadrangular prism having a predetermined refractive index and a second prism 66 which is triangular prism having a predetermined refractive index are joined and integrated with each other. In an integrated state, the receiving prism 64 has the same outer shape as the outer shape of the receiving prism 39 in the first embodiment. A dichroic filter film is provided on a joined surface 67 of the first prism 65 and the second prism 66, and the joined surface 67 is configured to transmit through a reflected distance measuring light 43 and reflect the tracking light 61 (a reflected tracking light 68) reflected on an object. That is, the joined surface 67 is a separating surface for separating the reflected distance measuring light 43 (a light receiving optical axis 34) and the reflected tracking light 68 (the tracking light receiving optical axis 62) from each other. It is to be noted that a first surface 65a, a second surface 65b, and a third surface 65c in the receiving prism 64 have the same configurations as the configurations of the first surface 39a, the second surface 39b, and the third surface 39c of the receiving prism 39 in the first embodiment.

Further, a light amount adjusting plate 38 and a photodetector 37 are provided on a transmission side of the joined surface 67, and the tracking photodetector 63 is provided on a reflection side of the joined surface 67. That is, the joined surface 67 is placed on a common optical path of the reflected distance measuring light 43 and the reflected tracking light 68 (an intersecting position of the light receiving optical axis 34 and the tracking light receiving optical axis 62), and separates the reflected distance measuring light 43 and the reflected tracking light 68 from each other which have coaxially entered the receiving prism 64.

The tracking photodetector 63 is a CCD or a CMOS sensor which is an aggregation of pixels, and a position of each pixel on the tracking photodetector 63 can be identified. For instance, each pixel has pixel coordinates in a coordinate system with the center of the tracking photodetector 63 as an origin, and its position on the tracking photodetector 63 can be identified by the pixel coordinates. Each pixel outputs pixel coordinates together with a light reception signal to the arithmetic control module 17.

When tracking an object, an arithmetic control module 17 irradiates the tracking light 61 coaxially with the distance measuring light 32, calculates an incidence position of the reflected tracking light 68 which reflected by the object with respect to the tracking photodetector 63, and calculates a deviation between the incidence position and the center of the tracking photodetector 63. Based on the deviation, the arithmetic control module 17 controls a horizontal rotation motor 8 and the vertical rotation motor 13 in such a manner that the incidence position of the reflected tracking light 68 coincides with the center of the tracking photodetector 63. Thereby, the surveying instrument main body 3 tracks the object.

In the fourth embodiment, optical components for the distance measurement and optical components for the tracking are partially shared, and the distance measuring light 32 and the tracking light 61 are configured to irradiate the object coaxially. Therefore, even if a tracking function is added to the surveying instrument 1, it is possible to downsize an optical system of the distance measuring unit 19.

It is to be noted that a transmission side of the dichroic mirror 59 may be set as a distance measuring light projecting module 23, and a reflection side of the dichroic mirror 59 may be set as the tracking light projecting module 54. Further, a transmission side of the joined surface 67 may be set as the tracking light receiving module 55, and a reflection side of the joined surface 67 may be set as the distance measuring light receiving module 24.

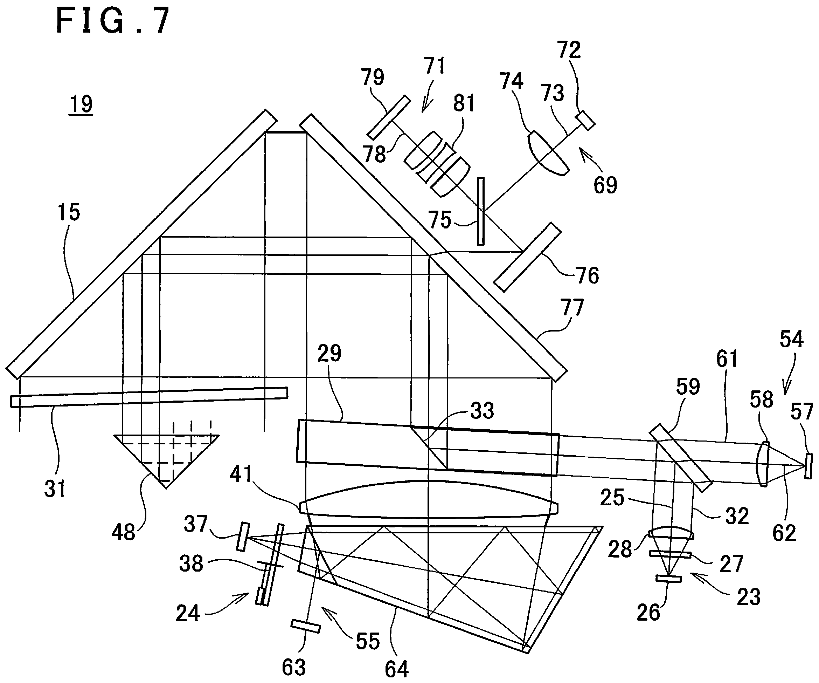

Next, by referring to FIG.7, a description will be given on a fifth embodiment of the present invention. It is to be noted that, in FIG.7, the same components as shown in FIG.6 are referred by the same symbols, and detailed description thereof will be omitted.

In the fifth embodiment, in addition to a distance measuring light projecting module 23, a distance measuring light receiving module 24, a tracking light projecting module 54, and a tracking light receiving module 55 similar to those in the fourth embodiment, a laser pointer light projecting module 69 and an image pickup module 71 are coaxially provided.

The laser pointer projecting module 69 has a laser pointer light emitter 72, a light projecting lens 74 and a beam splitter 75 provided on an optical axis of a laser pointer light projected from the laser pointer light emitter 72 (a laser pointer optical axis 73), a mirror 76 provided on a reflected optical axis of the beam splitter 75, and a short-pass filter plate 77 provided on a reflected optical axis of the mirror 76. It is to be noted, in the present embodiment, the laser pointer optical axis 73, and a laser pointer optical axis 73 reflected by the mirror 76 and the short-pass filter plate 77 are generically referred to as the laser pointer optical axis 73.

The laser pointer light emitter 72 is, for instance, a laser diode which projects a laser beam in a visible light range. The beam splitter 75 deflects the laser pointer optical axis 73 coaxially with an image pickup optical axis 78 (to be described later). That is, the beam splitter 75 is arranged at an intersecting position of the laser pointer optical axis 73 and the image pickup optical axis 78. Further, the mirror 76 reflects the laser pointer optical axis 73 toward the short-pass filter plate 77.

The short-pass filter plate 77 has optical characteristics to transmit through a visible light and reflect a distance measuring light 32 (a reflected distance measuring light 43) and a tracking light 61 (a reflected tracking light 68). Further, the short-pass filter plate 77 deflects a distance measuring optical axis 25 and a tracking optical axis 56 in such a manner that the distance measuring optical axis 25 and the tracking optical axis 56 become coaxial with a laser pointer optical axis 73 transmitted through the short-pass filter plate 77. Further, the short-pass filter plate 77 separates the image pickup optical axis 78 from the light receiving optical axis 34 and a tracking light receiving optical axis 62. That is, the short-pass filter plate 77 is arranged on a common optical path of the distance measuring light 32 (the tracking light 61) and a laser pointer light.

The image pickup module 71 has an image pickup element 79, a light receiving lens group 81, the beam splitter 75, the mirror 76, and the short-pass filter plate 77 provided on an optical axis of a background light received by the image pickup element 79 (the image pickup optical axis 78).

The image pickup element 79 is a CCD or a CMOS sensor which is an aggregation of pixels, and a position of each pixel on the image pickup element 79 can be identified. For instance, each pixel has pixel coordinates in a coordinate system with the center of the image pickup element 79 as an origin, and its position on the image pickup element 79 can be identified by the pixel coordinates. Each pixel outputs pixel coordinates together with a light reception signal to the arithmetic control module 17.

The reflected distance measuring light 43, the reflected tracking light 68, and a reflected laser pointer light which have been coaxially irradiated and coaxially reflected enter the distance measuring unit 19 together with the background light, and each light are separated when the reflected laser pointer light and the background light are transmitted through the short-pass filter plate 77.

Further, the reflected laser pointer light and the background light which have been transmitted through the short-pass filter plate 77 are reflected by the mirror 76, and imaged on the image pickup element 79 via the beam splitter 75 and the light receiving lens group 81, and an image is acquired.

In the fifth embodiment, the laser pointer light projecting module 69, the image pickup module 71, the distance measuring optical axis 25 and the tracking optical axis 56 are provided in such a manner that each module and axis becomes coaxial with each other. Therefore, since it is possible to share some of optical members used in the distance measurement, the tracking, the image pickup, and others, which achieves downsizing an optical system and a reduction in the number of components.

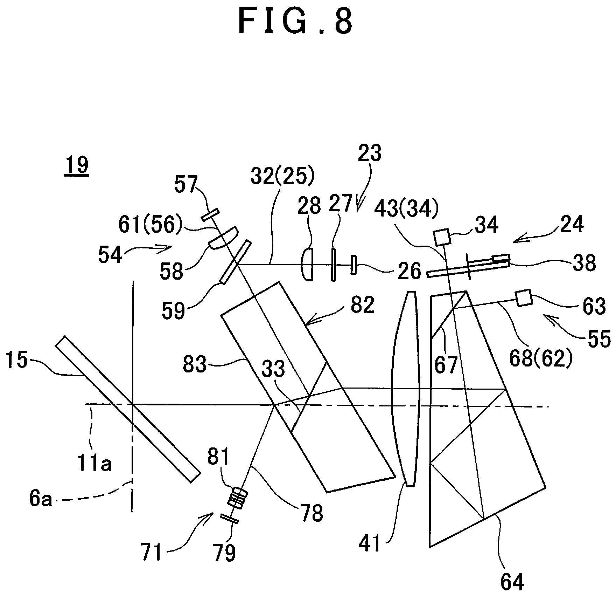

Next, by referring to FIG.8, a description will be given on a sixth embodiment of the present invention. It is to be noted that, in FIG.8, the same components as shown in FIG.6 are referred by the same symbols, and detailed description thereof will be omitted.

In the sixth embodiment, in addition to a distance measuring light projecting module 23, a distance measuring light receiving module 24, a tracking light projecting module 54, and a tracking light receiving module 55, an image pickup module 71 is added.

Further, in the sixth embodiment, a reflecting prism 82 tilts at approximately 35° with respect to an axis 11a, and a long-pass filter surface 83 having a long-pass filter provided is formed on a projecting surface of the reflecting prism 82 (a left surface with respect to a plane of paper). Further, a lower portion of the reflecting prism 82 is formed a chamfered portion.

The long-pass filter surface 83 has optical characteristics to reflect a visible light and transmit through an infrared light and a near-infrared light. That is, the long-pass filter surface 83 is a separating surface which reflects a background light and transmits through a reflected distance measuring light 43 and a reflected tracking light 68 which have entered coaxially.

An optical axis of the background light separated and reflected by the long-pass filter surface 83 is the image pickup optical axis 78, and a light receiving lens group 81 and an image pickup element 79 are provided on the image pickup optical axis 78. Therefore, the background light which has entered the reflecting prism 82 is reflected on the long-pass filter surface 83, and enters the image pickup element 79. The other structures are substantially the same as the structures in the fourth embodiment.

In the sixth embodiment, the long-pass filter surface 83 provided on the projecting surface of the reflecting prism 82 is used as a separating surface by which the background light is separated. Therefore, since a mirror or a prism does not have to be additionally provided in order to separate the background light, which achieves a reduction in the number of components and the downsizing of an optical system.

It is to be noted that, in the present invention, needless to say, the first embodiment to the sixth embodiment may be appropriately combined.

## Claims

1. A surveying instrument comprising: a distance measuring light projecting module (23) configured to project a distance measuring light (32) to an object, a distance measuring light receiving module (24) having a photodetector (37) configured to receive a reflected distance measuring light (43) from said object, and an arithmetic control module (17) configured to control said distance measuring light projecting module and calculate a distance to said object based on a light reception result of said reflected distance measuring light with respect to said photodetector, wherein said distance measuring light projecting module has a reflecting prism (29, 52, 82) having two prisms joined together, a beam splitter film (35) having a predetermined reflectance and transmittance is formed on a joined surface (33) of said reflecting prism, and said reflecting prism is configured to deflect an optical axis (25) of said distance measuring light via said beam splitter film so as to coincide with an optical axis (34) of said reflected distance measuring light, **characterized in that** said reflecting prism is tilted with respect to said optical axis of said reflected distance measuring light, such that said distance measuring light, reflected by the beam splitter film, transmits at a slight slant through a projecting surface of said reflecting prism.

2. The surveying instrument according to claim 1, wherein said distance measuring light projecting module (23) has a light emitter (26) which emits said distance measuring light (32), a plane-parallel plate (27), a collimator lens (28), and said reflecting prism (29) provided on the distance measuring optical axis (25) sequentially from a light emission side, the plane-parallel plate (27) being insertable into or removable from said optical axis (25) of said distance measuring light, such that a spread angle of said distance measuring light is changeable by inserting or removing said plane-parallel plate.

3. The surveying instrument according to any one of claims 1 or 2, further comprising a tracking light projecting module (54) configured to project a tracking light (61) to said object coaxially with said distance measuring light (32), and a tracking light receiving module (55) having a tracking photodetector (63) configured to receive a reflected tracking light (68) reflected from said object coaxially with said reflected distance measuring light (43), wherein a dichroic mirror (59) configured to coincide said optical axis (25) of said distance measuring light with an optical axis (56) of said tracking light is provided on a common optical path of said distance measuring light and said tracking light, and a separating surface (67) configured to separate said optical axis (34) of said reflected distance measuring light from an optical axis (62) of said reflected tracking light is provided on a common optical path of said reflected distance measuring light and said reflected tracking light.

## Patentansprüche

1. Vermessungsinstrument umfassend: ein Entfernungsmesslichtprojektionsmodul (23), das konfiguriert ist, ein Entfernungsmessungslicht (32) auf ein Objekt zu projizieren, ein Entfernungsmesslichtempfangsmodul (24) mit einem Photodetektor (37), der konfiguriert ist, ein von dem Objekt reflektiertes Entfernungsmesslicht (43) zu empfangen, und ein arithmetisches Steuermodul (17), das konfiguriert ist, das Entfernungsmesslichtprojektionsmodul zu steuern und eine Entfernung zu dem Objekt auf der Grundlage eines Lichtempfangsergebnisses des reflektierten Entfernungsmesslichts in Bezug auf den Photodetektor zu berechnen, wobei das Entfernungsmesslichtprojektionsmodul ein reflektierendes Prisma (29, 52, 82) mit zwei miteinander verbundenen Prismen aufweist, wobei ein Strahlteilerfilm (35) mit einer vorbestimmter Reflektivität und Transmission auf einer verbundenen Oberfläche (33) des reflektierenden Prismas ausgebildet ist, und das reflektierende Prisma konfiguriert ist, eine optische Achse (25) des Entfernungsmesslichts über den Strahlteilerfilm so abzulenken, dass sie mit einer optischen Achse (34) des reflektierten Entfernungsmesslichts zusammenfällt, **dadurch gekennzeichnet, dass** das reflektierende Prisma in Bezug auf die optische Achse des reflektierten Entfernungsmesslichts geneigt ist, sodass das das von dem Strahlteilerfilm reflektierte Entfernungsmesslicht mit einer leichten Neigung durch Austrittsfläche des reflektierenden Prismas hindurchtritt.

2. Vermessungsinstrument nach Anspruch 1, wobei das Entfernungsmesslichtprojektionsmodul (23) einen Lichtemitter (26), der das Entfernungsmesslicht (32) emittiert, eine planparallele Platte (27), eine Kollimatorlinse (28) und das reflektierende Prisma (29) aufweist, die nacheinander von der Lichtaustrittsseite her auf der optischen Achse (25) des Entfernungsmesslichts vorgesehen sind, wobei die planparallele Platte (27) in die optische Achse (25) des Entfernungsmesslichts einsetzbar oder aus dieser entfernbar ist, sodass ein Divergenzwinkel des Entfernungsmesslichts durch Einsetzen oder Entfernen der planparallelen Platte veränderbar ist.

3. Vermessungsinstrument nach einem der Ansprüche 1 oder 2, ferner umfassend ein Nachführlicht-Projektionsmodul (54), das konfiguriert ist, ein Nachführlicht (61) koaxial mit dem Entfernungsmesslicht (32) auf das Objekt zu projizieren, und ein Nachführlichtempfangsmodul (55) mit einem Nachführphotodetektor (63), der konfiguriert ist, ein reflektiertes Nachführlicht (68) zu empfangen, das von dem Objekt koaxial mit dem reflektierten Entfernungsmesslicht (43) reflektiert wird, wobei ein dichroitischer Spiegel (59), der konfiguriert ist, die optische Achse (25) des Entfernungsmesslichts mit einer optischen Achse (56) des Nachführlichts zusammenfallen zu lassen, auf einem gemeinsamen optischen Pfad des Entfernungsmesslichts und des Nachführlichts vorgesehen ist, und eine Trennfläche (67), die konfiguriert ist, die optische Achse (34) des reflektierten Entfernungsmesslichts von einer optischen Achse (62) des reflektierten Nachführlichts zu trennen, auf einem gemeinsamen optischen Pfad des reflektierten Entfernungsmesslichts und des reflektierten Nachführlichts vorgesehen ist.

## Revendications

1. Un instrument d'arpentage comprenant un module de projection de lumière de mesure de distance (23) configuré pour projeter une lumière de mesure de distance (32) vers un objet, un module de réception de lumière de mesure de distance (24) ayant un photodétecteur (37) configuré pour recevoir une lumière de mesure de distance réfléchie (43) par ledit objet, et un module de commande arithmétique (17) configuré pour commander ledit module de projection de lumière de mesure de distance et calculer une distance à cet objet sur la base d'un résultat de réception de lumière de mesure de distance réfléchie par ledit photodétecteur, dans lequel ledit module de projection de lumière de mesure de distance comporte un prisme réfléchissant (29, 52, 82) composé de deux prismes assemblés, un film séparateur de faisceau (35) ayant une réflectance et une transmittance prédéterminées est formé sur une surface jointe (33) dudit prisme réfléchissant, et ledit prisme réfléchissant est configuré pour dévier un axe optique (25) de ladite lumière de mesure de distance via ledit film séparateur de faisceau de manière à coïncider avec un axe optique (34) de ladite lumière de mesure de distance réfléchie, **caractérisé en ce que** ledit prisme réfléchissant est incliné par rapport audit axe optique de ladite lumière de mesure de distance réfléchie, de sorte que ladite lumière de mesure de distance, réfléchie par le film séparateur de faisceau, est transmise avec une légère inclinaison à travers une surface de projection dudit prisme réfléchissant.

2. L'instrument d'arpentage selon la revendication 1, dans lequel ledit module de projection de lumière de mesure de distance (23) comprend un émetteur de lumière (26) qui émet ladite lumière de mesure de distance (32), une plaque plane-parallèle (27), une lentille de collimation (28) et ledit prisme réfléchissant (29), étant disposés sur l'axe optique de mesure de distance (25) dans l'ordre à partir du côté d'émission de lumière, la plaque plane-parallèle (27) pouvant être insérée dans ou retirée dudit axe optique (25) de ladite lumière de mesure de distance, de telle sorte que l'angle de divergence de ladite lumière de mesure de distance puisse être modifié en insérant ou en retirant ladite plaque plane-parallèle.

3. L'instrument d'arpentage selon l'une des revendications 1 ou 2, comprenant en outre un module de projection de lumière de poursuite (54) configuré pour projeter une lumière de poursuite (61) sur ledit objet coaxialement avec ladite lumière de mesure de distance (32), et un module de réception de lumière de poursuite (55) ayant un photodétecteur de poursuite (63) configuré pour recevoir une lumière de poursuite réfléchie (68) réfléchie par ledit objet, coaxialement avec ladite lumière de mesure de distance réfléchie (43), dans lequel un miroir dichroïque (59) configuré pour faire coïncider ledit axe optique (25) de ladite lumière de mesure de distance avec un axe optique (56) de ladite lumière de poursuite est prévu sur un trajet optique commun de ladite lumière de mesure de distance et de ladite lumière de poursuite, et une surface de séparation (67) configurée pour séparer ledit axe optique (34) de ladite lumière de mesure de distance réfléchie d'un axe optique (62) de ladite lumière de poursuite réfléchie est prévue sur un trajet optique commun de ladite lumière de mesure de distance réfléchie et de ladite lumière de poursuite réfléchie.
